# EUROPÄISCHE PATENTANMELDUNG

(11) **EP 1 898 395 A2**
(43) Veröffentlichungstag der Anmeldung: **12.03.2008**
(21) Anmeldenummer: 07017008.9
(22) Anmeldetag: 30.08.2007
(51) Int. Cl.: G10L 17/00

(54) **Verfahren und Vorrichtung zur Teilnehmeridentifizierung**

(30) Priorität: 11.09.2006 DE 102006043240
(71) Anmelder: Telio AG, 22765 Hamburg (DE)
(72) Erfinder: Grunig, Torsten, 10245 Berlin (DE)
(74) Vertreter: Beetz & Partner

(57) **Zusammenfassung**

Die vorliegende Erfindung betrifft ein Verfahren und eine Vorrichtung zur Teilnehmerverifizierung in einem Kommunikationsnetz mit den Schritten: identifizieren eines ersten Teilnehmers (S 11, S12), erfassen von mindestens einer Stimmprobe des ersten Teilnehmers und erzeugen eines Sprachmusters des ersten Teilnehmers (S 15), verifizieren der Stimmprobe des ersten Teilnehmers (S21), erfassen von mindestens einer Stimmprobe mindestens eines weiteren Teilnehmers und erzeugen mindestes eines Sprachmusters jedes weiteren Teilnehmers (S17), verifizieren der Stimmproben jedes weiteren Teilnehmers (S31) .

## Beschreibung

Die vorliegende Erfindung betrifft ein Verfahren und eine Vorrichtung zur Teilnehmeridentifizierung, insbesondere ein Verfahren und eine Vorrichtung zur Teilnehmerverifizierung in einem Kommunikationsnetz.

In modernen Kommunikationsnetzen bestehen vielfältige Möglichkeiten Sprachverbindungen herzustellen. Dies kann einerseits über leitungsvermittelte Verbindungen (d.h. Festnetz, Mobilfunk), oder, aufgrund der Zunahme von Breitbandanschlüssen, über paketvermittelte Verbindungen (z.B. Voice-over-IP (VoIP)) geschehen.

Aufgrund der verschiedensten Routingverfahren oder Protokolle ist eine effiziente Überwachung bzw. Aufzeichnung des Kommunikationsverkehrs kaum möglich.

Dies gilt insbesondere für den Kommunikationsverkehr durch Kommunikationsteilnehmer, die nur mit einem begrenzten Personenkreis kommunizieren dürfen, z. B. Insassen einer Justizvollzugsanstalt. Bei Insassen einer Justizvollzugsanstalt kann der Kommunikationsverkehr reglementiert werden müssen, um z. B. Anrufe der Insassen bei Tatopfern oder Komplizen zu unterbinden.

Bisherige Lösungen dieser Problemstellung beschränken sich auf die Identifizierung des Insassen bzw. Anrufenden (A-Teilnehmer), um anhand dieser Identifizierung Rufnummern aus Listen mit zugelassenen bzw. gesperrten Rufnummern der Angerufenen (B-Teilnehmer) auszuwählen. Da diese Lösungen anschlussadressenbasiert sind, müssen alle Anschlüsse, die der A-Teilnehmer anrufen darf, frei geschaltet sein. Ansonsten besteht die Gefahr, dass es zu unerwünschten bzw. unerlaubten Anrufen kommen kann. Die Pflege der entsprechenden Listen ist mit hohem zeitlichem und personellem Aufwand verbunden.

Ein weiterer Nachteil der bisher vorgeschlagenen Lösungen besteht darin, dass eine Weitervermittlung zu einem öffentlichen Apparat, Mobilfunktelefon oder einen VoIP-Anschluss nicht sicher erfasst werden kann. Dies wird mit den bisher bekannten Lösungen dadurch gelöst, dass alle Gespräche durch Dritte überwacht (z.B. mitgehört) werden. Dies ist aber mit hohem zeitlichem und personellem Aufwand verbunden oder durch datenschutzrechtliche Bestimmungen untersagt.

Weiterhin besteht ein Nachteil der bisherigen Lösungen darin, dass auf der Seite des A-Teilnehmers der Hörer weitergegeben wird oder die Daten zur Authentisierung von einem Teilnehmer auf einen anderen Teilnehmer übertragen werden, um so zu einer Identität zu gelangen die weniger oder anderen Beschränkungen unterliegt.

Es ist daher eine Aufgabe der Erfindung, ein Verfahren und eine Vorrichtung zur Teilnehmeridentifizierung und -verifizierung anzugeben, welche die genannten Nachteile vermeidet.

Diese Aufgabe wird durch ein Verfahren und eine Vorrichtung zur Teilnehmeridentifizierung und Verifizierung gemäß den unabhängigen Ansprüchen gelöst. Die abhängigen Ansprüche zeigen bevorzugte Ausführungsformen.

Das Verfahren zur Teilnehmerverifizierung in einem Kommunikationsnetz kann mindestens einen der folgenden Schritte enthalten: identifizieren eines ersten Teilnehmers, erfassen von mindestens einer Stimmprobe des ersten Teilnehmers, erzeugen eines Sprachmusters des ersten Teilnehmers, verifizieren der Stimmprobe des ersten Teilnehmers, erfassen von mindestens einer Stimmprobe mindestens eines weiteren Teilnehmers, erzeugen mindestes eines Sprachmusters jedes weiteren Teilnehmers, und/oder verifizieren der Stimmproben jedes weiteren Teilnehmers.

Der erste Teilnehmer kann durch ein geeignetes Verfahren wie z. B. Chipkarte, Kontonummer mit/ohne PIN, biometrische Daten wie Fingerabdruck, Irisscan, Voiceprint, Schriftprobe und/oder eine Kombination daraus identifiziert werden.

Nachdem der erste Teilnehmer identifiziert wurde kann dessen Identität über eine textunabhängige Sprecherverifizierung überprüft werden. Dazu wird mindestens eine textunabhängige Stimmprobe dieses Teilnehmers erfasst, aus der anschließend mittels eines geeigneten Algorithmus ein Sprachmuster, d.h. ein Voiceprint, erzeugt wird.

Durch Überprüfen dieses Sprachmusters mit einem hinterlegten, vorher aufgenommenen Sprachmuster, kann die Stimmprobe des ersten Teilnehmers verifiziert werden. Aufgrund der Identifizierung des Teilnehmers und der Überprüfung des Sprachmusters dieses Teilnehmers ist es möglich, den Teilnehmer mit ausreichender Sicherheit zu bestimmen.

Mindestens ein weiterer Teilnehmer kann durch eine textunabhängige Sprecherverifizierung erkannt werden. Dabei wird von dem weiteren Teilnehmer mindestens eine Stimmerobe erfasst, aus der anschließen mittels eines geeigneten Algorithmus ein Sprachmuster erzeugt wird. Dieses Sprachmuster kann anschließend mit den hinterlegten Sprachmustern verglichen werden.

Führt der Vergleich zu einem positiven Ergebnis (d.h. das Sprachmuster bzw. der Sprecher sind bekannt) kann in dem Verfahren eine Reaktion ausgelöst werden. Für den Fall, dass der Vergleich zu einem negativen Ergebnis führt (d.h. das Sprachmuster bzw. der Sprecher sind nicht bekannt), kann in dem Verfahren eine weitere Reaktion ausgelöst werden. Mögliche Reaktionen bzw. Aktionen werden später beschrieben.

In dem erfindungsgemäßen Verfahren ist es möglich, die Stimmproben der Teilnehmer kontinuierlich zu erfassen und mittels der daraus erzeugten Sprachmuster kontinuierlich und in Echtzeit zu verifizieren.

Durch die kontinuierliche Erfassung besteht die Möglichkeit, Weitervermittlungen und/oder das Weiterreichen des Telefonhörers, d.h. den Wechsel jedes Teilnehmers (A-Teilnehmer und/oder B-Teilnehmer), zu erkennen.

In einer bevorzugten Ausführungsform werden die Stimmproben der Teilnehmer durch einen Vergleich der Sprachmuster mit vorher abgelegten Sprachmustern verifiziert. Durch die Erzeugung eines Sprachmusters aus der Stimmprobe des Teilnehmers ist es möglich diese zu vergleichen und das Datenvolumen zu reduzieren, da das Sprachmuster aus charakteristischen Parametern der Stimme besteht.

Der Vergleich der Sprachmuster kann anhand einer Positiv- bzw. Negativliste erfolgen. In einer Positivliste sind alle erlaubten Verbindungsdaten enthalten. In einer Negativliste hingegen sind alle nicht erlaubten Verbindungsdaten enthalten, d.h. bei Verwendung einer Positivliste sind alle Verbindungen, außer den in der Liste aufgeführten, gesperrt, umgekehrt sind in einer Negativliste alle Verbindungen, außer, den in der Liste aufgeführten erlaubt.

In einer bevorzugten Ausführungsform kann als Reaktion auf das Ergebnis der Verifizierung der Stimmprobe des Teilnehmers mindestens eine weitere Stimmprobe erfasst und bearbeitet. Dadurch ist es möglich, auch nicht bekannte Teilnehmer bereits während des Gesprächs zu erfassen, wodurch das gesamte System trainiert wird.

In einer anderen bevorzugten Ausführungsform kann als Reaktion auf das Ergebnis der Verifizierung der Stimmprobe des Teilnehmers das Verfahren beendet werden. Dadurch ist es möglich, jeden unerwünschten bzw. unerlaubten Kontakt zu unterbinden.

In einer anderen bevorzugten Ausführungsform kann als Reaktion auf das Ergebnis der Verifizierung der Stimmprobe des Teilnehmers eine Verbindung zu einem weiteren Teilnehmer aufgebaut werden. Durch diese zusätzliche Verbindung ist es möglich, während des bestehenden Gesprächs zu entscheiden, ob der Kontakt zugelassen werden soll oder nicht. Ferner kann durch diese zusätzliche Verbindung noch während des Gesprächs eine Stimmprobe des B-Teilnehmers genommen werden und somit das System weiter trainiert werden.

Als Reaktion auf das Ergebnis der Verifizierung der Stimmprobe des Teilnehmers kann auch jede weitere Aktion ausgeführt werden, mit der sichergestellt werden kann, dass unerwünschte Kontakte jetzt und in Zukunft zuverlässig unterbunden werden.

Weiterhin ist es möglich, dass die Sprachmuster in Form von Stimm- oder Sprachcharakteristika wie z.B. Vektoren, Frames oder Ähnlichem abgelegt werden.

In einer bevorzugten Ausführungsform kann das Verifizierungsergebnis mit dem aufgezeichneten Gespräch verknüpft werden. Dazu können während des Gesprächs, bei entsprechenden Verifizierungsergebnissen (unbekannt, nicht erlaubt, etc), Zeitmarken gesetzt. Während einer anschließenden Analyse ist es nur noch notwendig die markierten Abschnitte zu überprüfen und zu bewerten.

In einer weiteren bevorzugten Ausführungsform können die nicht bekannten Stimmproben automatisch qualifiziert und abgelegt werden. Dies kann beispielsweise durch die Verwendung einer künstlichen Intelligenz (KI) und/ oder eines neuronalen Netzwerks geschehen.

Es ist auch möglich, dass die Teilnehmer Mitglieder einer geschlossenen Benutzergruppe sind. Dadurch kann einerseits das Datenvolumen und andererseits der Aufwand zur Datenpflege weiter reduziert werden.

Die Erfindung sieht ferner eine Vorrichtung zur Teilnehmerverifizierung in einem Kommunikationsnetz vor, die mindestens eines der folgenden Mittel aufweist: Mittel zum Identifizieren eines ersten Teilnehmers, Mittel zum Erfassen von mindestens einer Stimmprobe des ersten Teilnehmers, Mittel zum Erzeugen eines Sprachmusters des ersten Teilnehmers, Mittel zum Verifizieren der Stimmprobe des ersten Teilnehmers, Mittel zum Erfassen von mindestens einer Stimmprobe mindestens eines weiteren Teilnehmers, Mittel zum Erzeugen mindestens eines Sprachmusters jedes weiteren Teilnehmers, und/oder Mittel zum Verifizieren der Stimmproben jedes weiteren Teilnehmers.

Ferner kann die Vorrichtung Mittel zur kontinuierlichen Erfassung von Stimmproben, Mittel zur Erzeugung von Sprachmustern und/oder Mittel zum Vergleich der Sprachmuster mit vorher abgelegten Sprachmustern aufweisen.

Des Weiteren kann die erfindungsgemäße Vorrichtung Mittel zur automatischen Bewertung und/oder Einordnung von Stimmproben aufweisen.

Die Mittel können als Software, Hardware oder einer Kombination daraus realisiert werden.

In einem Ausführungsbeispiel werden gezielt Stimmproben, z.B. des A-Teilnehmers und/oder B-Teilnehmers aufgezeichnet und einer Identität, d.h. einer bestimmten Person zugeordnet und gespeichert. Diese Identität kann beispielsweise durch Sichtkontakt bestätigt werden. Dadurch wird sichergestellt, dass der richtige Sprecher aufgezeichnet wird und eine eineindeutige Zuordnung des Sprechers zu der Stimmprobe stattfindet.

Während eines folgenden Telefongesprächs wird kontinuierlich in Echtzeit die Stimme des A-Teilnehmers und/ oder B-Teilnehmers mit den zugelassenen und/oder gesperrten Stimmproben verglichen. Weicht die aktuelle Stimmprobe von der hinterlegten Stimmprobe um einen vorher definierten Schwellenwert ab, wird eine geeignete Maßnahme eingeleitet, z.B. Trennung des Gesprächs, Meldung an Personal etc.

Die Vorteile, die sich daraus ergeben, können wie folgt beschrieben werden: Ein dauerhaftes Mithören des Gesprächs durch Dritte ist nicht notwendig um sicherzustellen, dass nur zugelassene Verbindungen aufgebaut und gehalten werden. Die Überwachung erfolgt permanent anhand der Stimmproben und durch daraus extrahierte Sprachmuster.

Der B-Teilnehmer ist von der Rufnummer/Anschlusskennung als Identifikationsmerkmal entkoppelt. Der Aufwand für die Pflege von Rufnummerlisten reduziert sich. Auch werden durch diese Entkopplung Rufumleitungen irrelevant.

Da der A-Teilnehmer zusätzlich durch die Stimmprobe identifiziert werden kann, wird eine Weitergabe der Identität erschwert bzw. unterbunden.

Werden zusätzlich Positiv- bzw. Negativlisten zur Beschränkung der Rufnummernkreise verwendet, kann ein möglicher Missbrauch des Systems weiter reduziert werden.

In einem weiteren Ausführungsbeispiel wird jedes zu überwachende Gespräch aufgezeichnet. Bei diesem Verfahren werden automatisch neue Stimmproben erfasst und zusammen mit einer Marke (Timestamp) gespeichert, wenn eine Stimmprobe bei der kontinuierlichen Überwachung von bekannten Stimmproben um einen vorher definierten Schwellenwert abweicht und nicht identifiziert werden kann.

Die derart markierten Stimmproben werden dann zur Nachbearbeitung z.B. an das Sicherheitspersonal übermittelt. Diese markierten Stimmproben können dann manuell z.B. durch das Sicherheitspersonal qualifiziert und der Stimmdatenbank/Sprachmusterdatenbank als Positiv- oder Negativeintrag zugefügt werden.

Die Vorteile, die sich daraus ergeben, sind die gleichen, die sich auch im vorangegangenen Ausführungsbeispiel ergeben haben. Ferner kann jeder Teilnehmer das System sofort nutzen, da für den reibungslosen Ablauf eine nachträgliche Identifizierung ausreicht.

Weitere Besonderheiten und Vorzüge der Erfindung lassen sich anhand der schematischen Zeichnungen und der folgenden Beschreibung entnehmen; es zeigen:
Fig. 1 den allgemeinen Ablauf des erfindungsgemäßen Verfahrens,
Fig. 2 den Ablauf einer ersten Reaktion,
Fig. 3 den Ablauf einer zweiten Reaktion, und
Fig. 4 den schematischen Aufbau der erfindungsgemäßen Vorrichtung.

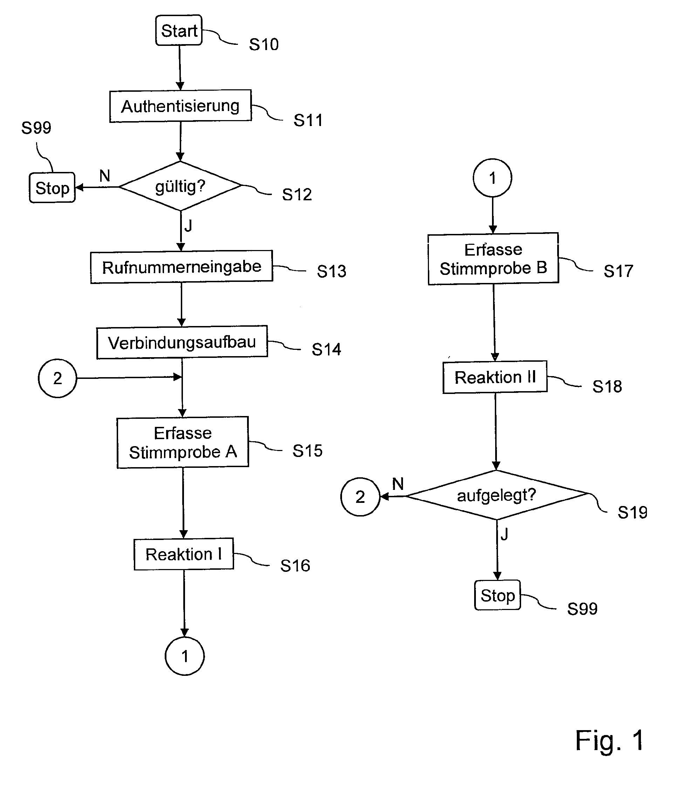

Fig. 1 zeigt ein Ablaufdiagramm des erfindungsgemäßen Verfahrens. Das Verfahren beginnt im Schritt S 10. Nachdem sich der Teilnehmer im Schritt S 11 mittels Eingabe einer spezifischen Kennung authentisiert hat, wird seine Identität im Schritt S 12 authentisiert. Ist die Authentisierung nicht erfolgreich, wird im Schritt S99 das Verfahren abgebrochen. Bei einer erfolgreichen Authentisierung wird der Teilnehmer zu einer Rufnummerneingabe im Schritt S 13 aufgefordert. Im Schritt S 14 wird anhand der eingegebenen Rufnummer eine Verbindung aufgebaut.

Nach dem Verbindungsaufbau wird im Schritt S 15 eine Stimmprobe des A-Teilnehmers erfasst. Im Schritt S 16 wird die Stimmprobe bewertet und eine entsprechende Reaktion ausgelöst.

Während des Gesprächs wird ebenso eine Stimmprobe des B-Teilnehmers im Schritt S 17 erfasst. Diese wird im Schritt 18 bewertet und eine entsprechende Reaktion ausgelöst.

Im Schritt 19 wird überprüft, ob einer der beiden Teilnehmer die Verbindung unterbrochen hat. Im Falle einer Verbindungsunterbrechung wird das Verfahren im Schritt S99 beendet. Andernfalls wird das Verfahren im Schritt S 15 fortgesetzt.

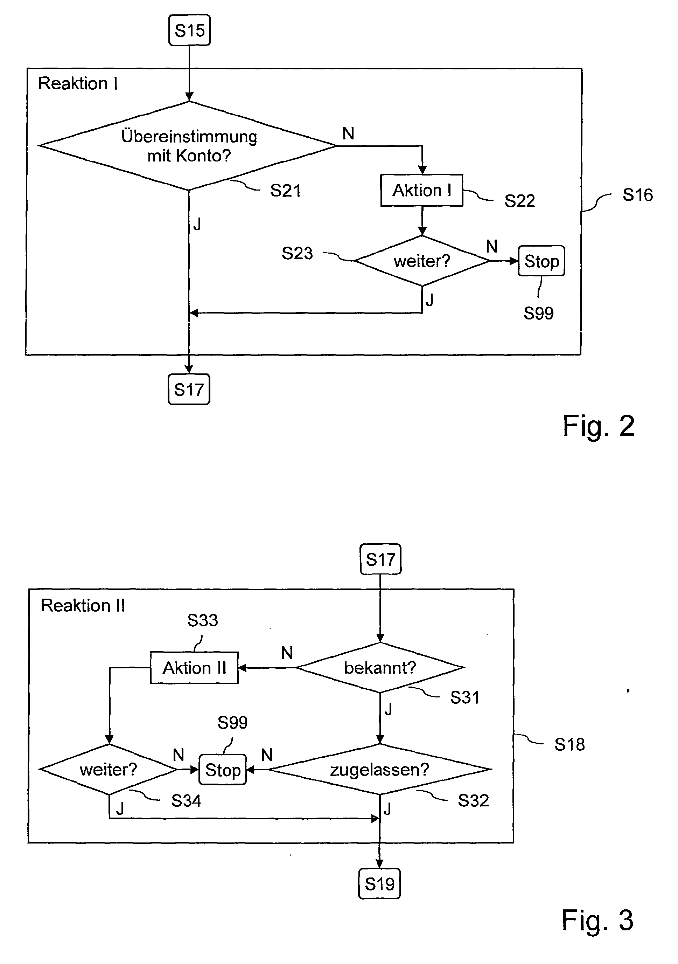

In Fig. 2 wird der Ablauf der Reaktion im Schritt S 16 beschrieben. Im Schritt S21 wird die Stimmprobe mit der für die entsprechende Identität hinterlegten verglichen. Stimmen die Daten überein, wird das Verfahren im Schritt S 17 fortgesetzt. Stimmen die Daten nicht überein, wird im Schritt S21 eine Aktion ausgelöst. Nachdem die Aktion ausgelöst wurde, wird im Schritt S23 entschieden, ob das Verfahren im Schritt S99 beendet wird oder im Schritt S 17 fortgeführt wird.

Fig. 3 beschreibt den Aufbau der Reaktion im Schritt S 18. Im Schritt S31 wird überprüft, ob der Teilnehmer B bekannt ist. Ist dieser Teilnehmer bekannt, wird im Schritt S32 überprüft, ob eine Verbindung zu diesem Teilnehmer zugelassen ist. Ist eine Verbindung zugelassen, wird das Verfahren im Schritt S 19 fortgeführt.

Wird im Schritt S31 festgestellt, dass der Teilnehmer B nicht bekannt ist, wird im Schritt S33 eine Aktion ausgeführt. Im Anschluss an diese Aktion wird im Schritt S34 entschieden, ob das Verfahren im Schritt S99 beendet wird oder bei Schritt S 19 weitergeführt wird. Sollte im Schritt S34 entschieden werden, dass das Verfahren nicht weitergeführt wird oder im Schritt S32 festgestellt werden, dass die Verbindung nicht zugelassen ist, wird das Verfahren im Schritt S99 beendet.

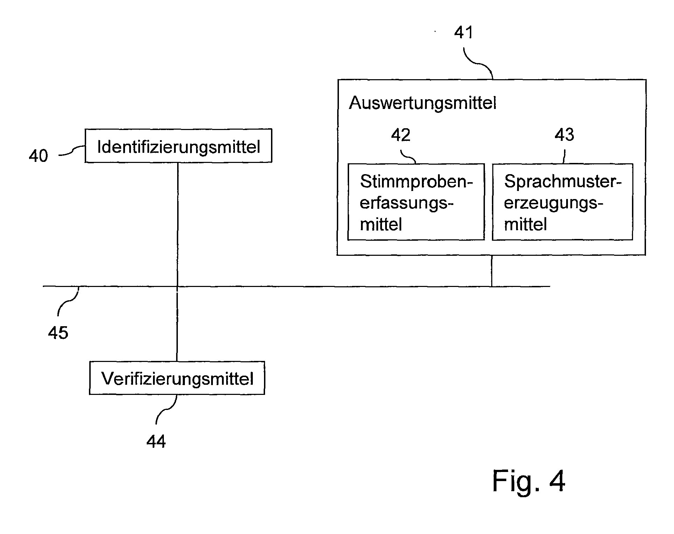

Fig. 4 zeigt den schematischen Aufbau der erfindungsgemäßen Vorrichtung. Die Vorrichtung enthält mindestens ein Identifizierungsmittel 40, ein Auswertungsmittel 41 und ein Verifizierungsmittel 44, die mittels eines Busses 45 miteinander verbunden sind. Das Auswertungsmittel 41 enthält ferner mindestens ein Stimmprobenerfassungsmittel 42 und ein Sprachmustererzeugungsmittel 43.

Merkmale, Komponenten und bestimmte Strukturdetails der oben beschriebenen Ausführungsformen können untereinander ausgetauscht oder miteinander kombiniert werden um so weitere Ausführungsformen zu bilden, die für eine entsprechende Anwendung optimiert sind. Soweit diese Änderungen für einen Fachmann offensichtlich sind, sind diese Änderungen implizit durch die obige Beschreibung offenbart, ohne auf jede mögliche Kombination explizit einzugehen.

## Patentansprüche

1. Verfahren zur Teilnehmerverifizierung in einem Kommunikationsnetz mit den Schritten:
- identifizieren eines ersten Teilnehmers,
- erfassen (S 12) von mindestens einer Stimmprobe des ersten Teilnehmers,
- erzeugen eines Sprachmusters des ersten Teilnehmers,
- verifizieren (S21) der Stimmprobe des ersten Teilnehmers.
- erfassen (S 17) von mindestens einer Stimmprobe mindestens eines weiteren Teilnehmers,
- erzeugen mindestes eines Sprachmusters jedes weiteren Teilnehmers, und
- verifizieren (S31) der Stimmproben jedes weiteren Teilnehmers.

2. Verfahren nach Anspruch 1, wobei die Stimmproben kontinuierlich erfasst und mittels der erzeugten Sprachmuster verifiziert werden.

3. Verfahren nach Anspruch 1 oder 2, wobei das Verifizieren der Stimmprobe des Teilnehmers durch einen Vergleich der Sprachmuster mit vorher abgelegten Sprachmustern erfolgt.

4. Verfahren nach Anspruch 3, wobei der Vergleich mittels einer Positiv- bzw. Negativliste durchgeführt wird.

5. Verfahren nach einem der Ansprüche 1-3, wobei basierend auf dem Ergebnis der Verifizierung der Stimmprobe des Teilnehmers eine weitere Stimmprobe erfasst und verarbeitet wird.

6. Verfahren nach einem der Ansprüche 1-3, wobei basierend auf dem Ergebnis der Verifizierung der Stimmprobe des Teilnehmers das Verfahren beendet wird (S99).

7. Verfahren nach einem der Ansprüche 1 - 3, wobei basierend auf dem Ergebnis der Verifizierung der Stimmprobe des Teilnehmers ein weiterer Teilnehmer zugeschaltet wird.

8. Verfahren nach einem der vorangegangenen Ansprüche, wobei die Sprachmuster in Form von Stimm- oder Sprachcharakteristika abgelegt werden.

9. Verfahren nach Anspruch 4, wobei das Verifizierungsergebnis mit einer Zeitmarke versehen wird.

10. Verfahren nach einem der vorangegangenen Ansprüche, wobei die weiteren Stimmproben automatisch qualifiziert und abgelegt werden.

11. Vorrichtung zur Teilnehmerverifizierung in einem Kommunikationsnetz mit:
- Mittel zum Identifizieren (40) eines ersten Teilnehmers,
- Mittel zum Erfassen (42) von mindestens einer Stimmprobe des ersten Teilnehmers,
- Mittel zum Erzeugen (43) eines Sprachmusters des ersten Teilnehmers,
- Mittel zum Verifizieren (44) der Stimmprobe des ersten Teilnehmers,
- Mittel zum Erfassen (42) von mindestens einer Stimmprobe mindestens eines weiteren Teilnehmers,
- Mittel zum Erzeugen (43) mindestens eines Sprachmusters jedes weiteren Teilnehmers, und
- Mittel zum Verifizieren (44) der Stimmproben jedes weiteren Teilnehmers.

12. Vorrichtung nach Anspruch 11, ferner mit
Mittel zum Vergleich der Sprachmuster mit vorher abgelegten Sprachmustern.

13. Vorrichtung nach Anspruch 11, ferner mit
Mittel zur automatischen Bewertung und/oder Einordnung von Stimmproben.
